# EUROPEAN PATENT APPLICATION

(11) **EP 1 315 307 A1**
(43) Date of publication of application: **28.05.2003**
(21) Application number: 01811134.4
(22) Date of filing: 23.11.2001
(51) Int. Cl.: H04B 1/707

(54) **Improved DS/CDMA signal acquisition**

(71) Applicant: Ascom Systec AG, 5506 Mägenwil (CH)
(72) Inventor: Reed, Mark Craig, 5702 Niederlenz (CH)
(74) Representative: Roshardt, Werner Alfred, Dipl.-Phys.

(57) **Abstract**

A process for acquisition of transmitted spread-spectrum direct sequence code division multiple access (DS-CDMA) signals in a digital communication system comprises the generation of soft estimates of received signals and subtracting them from an input baseband signal in order to generate a signal (31, 131) with reduced interference to be searched for known users or multi-path components of new users. A receiver structure implemented at a base station in a digital communication system with a plurality of mobile terminals, performing a process according to the invention shows reduced susceptibility to interference from other users of the communication system and the search for new signals is facilitated and accelerated. The application of the process according to the invention is particularly advantageous in combination with powerful multi-stage interference cancelling receivers.

## Description

### Technical Field

The invention relates to a process for acquisition of a transmitted spread-spectrum DS-CDMA (Direct Sequence Code Division Multiple Access) signal in a digital communication system in which an input baseband signal received at a location includes multiple signal components from multiple transmitters located at various locations and transmitted over different channels with different random codes. The process includes utilising the receiver knowledge about the decoded signals to subtract known signal components from the input baseband signal. The acquisition is therefore much improved in an environment which is interference limited. The invention further relates to a combined receiver structure for performing the aforementioned process in a digital communication system with a base station and a plurality of mobile terminals, where the base station comprises such a receiver structure.

### Prior Art

The DS-CDMA modulation technique has been developed for a next generation of digital cellular wireless communication, which e. g. allows for transmitting multimedia information. In CDMA communication, narrowband information of different channels (or users) to be transmitted is multiplexed using spreading codes which are different for every user, yielding a broadband signal, and transmitted via a transmission path, e.g. a wireless link. At the receiver, the original narrowband signal is restored by multiplying the broadband signal by a despreading code and using a sample and hold function, with the correct timing information.

For a correct restoration of the original signal the despreading code has to be synchronised with the received signal. Synchronising can be divided into two phases, an initial acquisition phase and a tracking phase. Initial acquisition usually results in synchronised code chip phases of the received signal and the despreading code. This synchronisation has to be very precise, usually within a small fraction of the chip length. When this precision is met the tracking function can maintain the code sequence in this range.

Advanced interference cancellation receivers designed for DS-CDMA communication systems can support a large number of users in the same cell, double or triple of what is currently possible in a conventional receiver (Rake receiver with Viterbi decoder). Additionally, multiple versions of the transmitted signal can arrive at the receiver via different paths, at delay times greater than the chip rate of the system. Having many users in one cell and having several such multi-path components of every signal leads to very high interference levels and therefore to a lot of noise in the received signal. Additionally, such a highly efficient receiver needs the same accurate timing information as required in a conventional receiver (RAKE receiver). Because of the high level of interference it is much more difficult to acquire new users with the necessary precision when using a highly efficient receiver which operates with many more users compared to the situation with conventional receivers.

The patent US 5 099 493 describes a receiver system in CDMA digital communication. Noise from interference, especially coming from strong ("near") signals hampers the acquisition and tracking of weak ("far") signals. This is the so-called near/far problem. The noise is reduced by subtracting from the input signal reconstructed waveform replicas of the signals already being processed by the receiver. A replica is obtained with minimal time delay by respreading and remodulating hard estimates of the signal transmitted in a given channel.

Another solution of the near/far problem consists in establishing a closed loop power control, such that stations close to the base station reduce their signal strength compared to the stations farther away. Still, even after the near/far problem has been solved, with current, highly-efficient receivers the reduction of noise caused by heavy interference is necessary to be able to perform timing acquisition at all.

### Representation of the Invention

It is therefore an object of the present invention to provide a process for acquisition of a spread-spectrum DS-CDMA signal transmitted in a channel of a digital communication system which substantially reduces noise from interference coming from other users as well as from other multi-path components in the channel, enabling reliable acquisition of new multi-path components or new users, even when the user to spreading factor ratio is greater than one.

The object can be achieved by a process defined by Claim 1.

According to the invention, in a process for acquisition of transmitted spread spectrum (SS) direct sequence (DS) code division multiple access (CDMA) signals in a digital communication system, an input baseband signal is received at one location including SS DS-CDMA signal components from multiple transmitters located at various locations and transmitted on different channels, especially via a multi-path distortion environment. According to the invention, despread soft estimates of the received signal components are generated over all users that are currently tracked, i. e. of all signal components whose timing is already known and which are demodulated and decoded. These soft estimates (not integers but real numbers) are respread yielding soft estimates of signals present in the input baseband signal. These soft estimates are summed up and the resulting signal is an estimate of the part of the input baseband signal coming from the tracked signals. The input baseband signal is delayed and the sum of soft estimates is subtracted from the delayed input baseband signal to align the timing phase with the receiver output. The resulting signal, exhibits reduced noise because of the cancellation of all the known signals. This interference reduced signal is subsequently searched for new user's signals or new multi-path components of users currently being tracked.

The delay, caused to the input base band signal is chosen such that the delayed signal stays synchronous to the signal experiencing delays due to the processing steps.

The input baseband signal consists of the tracked signals, signals to be acquired (new users, new multi-path components) as well as (usually weaker) noise, such as thermal noise, signals coming from sources outside the communication system or outside a respective cell of the communication system. After the estimated baseband signal (containing estimates of all the tracked signals) is subtracted from the (accordingly delayed) input baseband signal, the resulting signal contains besides noise additional signals coming from new users or new multi-path components to be processed by a usual acquisition circuit. Because the estimation of the tracked signals will never be completely perfect, there is also some residual noise from imperfect noise cancellation. This residual noise is minimised, however, due to the powerful interference cancelling (multiuser) receiver.

After removing most of the interference coming from other transmissions, acquisition of new users or new multipath components of current users is improved significantly. The correlation process of searching a received signal for known codes detects a sharp peak when the known code aligns with the correct timing with each new signal, clearly discernible from background noise, such that the despreading start timing of a new user's signal or delay times of new multi-path components are accurately determined. Additionally, the number of false signal peaks (caused by interference) detected by the correlation process substantially decreases, such that the amount of data produced by the acquisition process which has to be processed further is considerably reduced. For example, it is no longer necessary to check whether peaks detected in a correlation signal of a channel that is already active, correspond to multi-path components already detected or whether they are new.

The use of soft estimates (real valued numbers instead of binary values) improves performance compared to hard estimates (obtained by using limiters or discriminators). This is true in particular for rather weak signals being tracked where the soft estimate may differ considerably from a respread and remodulated hard estimate. With closed loop power control, a lot of users, and multi-path components the interference is not reduced by cancelling a few signals coming from strong emitters but all signals have to be cancelled.

Additionally, some current, highly-efficient multi-user receivers include, for efficient implementation, during the receiving process the generation of soft estimates of input signals, such that these are obtained for interference reduction at no extra cost.

In a system having interleaving and channel coding, if the transmitted signals have been coded and interleaved prior to emission in order to reduce their susceptibility to burst errors, the performance of the interference reduction process is substantially improved by first de-interleaving the despread input signals, then decoding and subsequently interleaving again these de-interleaved signals prior to the respread and rechannel function (this function includes the effect of the channel on the re-modulated signal). This technique is particularly useful in the presence of fading, caused by interference between different, time-shifted multi-path components of a signal.

A receiver structure according to the invention for acquisition of a transmitted spread spectrum (SS) direct sequence (DS) code division multiple access (CDMA) signal in a digital communication system receives an input baseband signal including multiple SS DS-CDMA signals from multiple transmitters located at various locations and transmitted on different channels, especially via a multi-path distortion environment. The receiver structure comprises a multi-user receiver that generates despread soft (real-valued) estimates of received signals for all multi-path components over all users currently tracked, i. e. of all signals that are tracked - demodulated and decoded - by the multi-user receiver. Respreading means are used for respreading these soft estimates, yielding soft estimates of input baseband signals. These soft estimates are summed up and passed to a subtractor. The input baseband signal is delayed by a delay unit and subsequently passed to another input of the subtractor where the sum of soft estimates is subtracted. The resulting signal, exhibiting reduced noise, is passed to a known searcher where the signal is searched for new user's signals or for new multi-path components of users currently tracked by the multi-user receiver.

The delay unit causes a delay to the input baseband signal which corresponds to the delay caused by the multi-user receiver, the despreading means and the summing means such that the delayed signal is again synchronous to the sum of soft estimates of the input baseband signals.

Employing a multi-user receiver for detecting and decoding the transmitted signals is advantageous to utilise the available information about signals that are currently tracked by the multi-user receiver for assisting the search process to find new users or new multi-path components.

Interleaved transmitted signals are de-interleaved by the multi-user receiver in order to obtain demodulated and decoded information. In this case, the multi-user receiver generates de-interleaved and decoded soft estimates of the tracked signals and additional interleaving means are comprised by the receiver structure to interleave the estimates prior to summing and subtracting from the (interleaved) input baseband signal. Additionally, performing de-interleaving and decoding and subsequent interleaving improves the quality of the estimates generated. Re-encoding of the decoded data is not needed as the decoder provides soft information on the coded bits which are re-interleaved.

The means for interleaving the de-interleaved and decoded signal are preferably integrated in the multi-user receiver. Some implementations of highly-efficient multi-user receivers effectively contain such means, such that in this case there is no extra cost for the de-interleaving/decoding/interleaving steps.

The multi-user receiver may decode the received, despread and de-interleaved signals in order to obtain decoded information, and subsequently pass the decoded signal to additional means for re-encoding comprised by the receiver structure.

Preferably, also the encoding means are integrated in the multi-user receiver.

Some designs of powerful receivers which support a large number of users in a single cell and which can cope with the correspondingly strong interference, include at least two receiver stages where all stages except the last stage utilise soft values. Only in the last stage the signal is finally despreaded, de-interleaved, decoded and hard limited in order to obtain the information bits corresponding to the initial signal. Because encoding, interleaving and respreading means are already provided by such a receiver and because such receivers require accurate acquisition, the use of a acquisition structure according to the invention together with such a receiver is very advantageous.

From the following detailed description and from all the claims as a whole it will be clear to a person skilled in the art, that there exist more advantageous embodiments and combinations of characteristics of the invention.

### Brief Descriptions of the Drawings

The drawings used for illustration of the examples show:
- Fig. 1: A schematic diagram of a general receiving structure according to the invention,
- Fig. 2: a schematic diagram of a realisation of a receiving structure according to the invention using a highly-efficient structure of a multi-user receiver.

In principle in the drawings the same objects are given the same reference signs.

### Preferred Embodiments

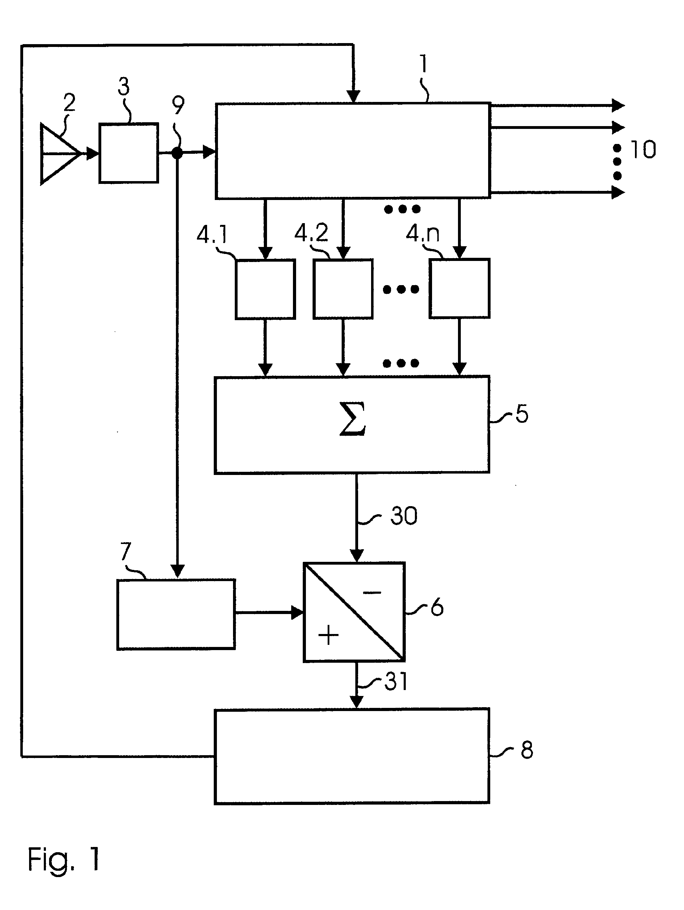

Figure 1 shows a schematic diagram of a general receiving structure according to the invention. Signals are received by an antenna 2 and initially processed by the receiving circuit 3 which performs in particular down conversion, filtering, automatic gain control and A/D conversion. The signal obtained is the input baseband signal 9, which is delivered to the multi-user receiver 1 and to a delay unit 7.

The specific structure of the multi-user receiver 1 is not displayed in this figure. Its input is the baseband spread spectrum signal 9. In general, for each channel of the communication system, a receiver is comprised. Such a channel receiver may comprise separate structures for receiving and combining different multi-path components of the signal transmitted in a channel, like e. g. a Rake receiver. The main output of the multi-user receiver 1 is a decoded signal 10 which has the form of demodulated and decoded information bits. According to the invention, it is important that the multi-user receiver additionally delivers soft (real-valued) estimates of the input signals corresponding to each active (tracked) user path. These estimates are delivered to respreading means 4.1-4.n for each user (where n is the number of users supported by the receiver). These outputs are remodulated with the spread spectrum code chips according to each user and processed with the channel effects yielding a soft respread estimate of the signals of each (tracked) user.

In the summer 5 these respread estimates are combined yielding a soft estimated signal 30 of the part of the input baseband signal coming from transmissions of tracked multi-path components.

The input baseband signal 9 is delayed by delay unit 7 such that it is kept in phase with the signal 30 processed by the multi-user receiver 1, the respreading means 4.1-4.n and the summer 5.

In a subtractor 6, the output signal 30 of summer 5 is combined with the delayed input baseband signal 9 such that the estimated signal 30 is effectively subtracted from the input baseband signal 9, thereby cancelling most of the interference coming from signals already being tracked by the multi-user receiver 1. The resulting interference-reduced signal 31 is delivered to a searcher 8, where it is used for the detection and acquisition of new users or new multi-path components of users already being tracked. The resulting timing positions for new user's signals or delay timings for new multi-path components are delivered to the multi-user receiver 1 which uses this information to synchronise the despreading code with the new received signal. It is expected that all signals detected in the interference reduced signal 31 correspond to new users or paths from currently tracked users.

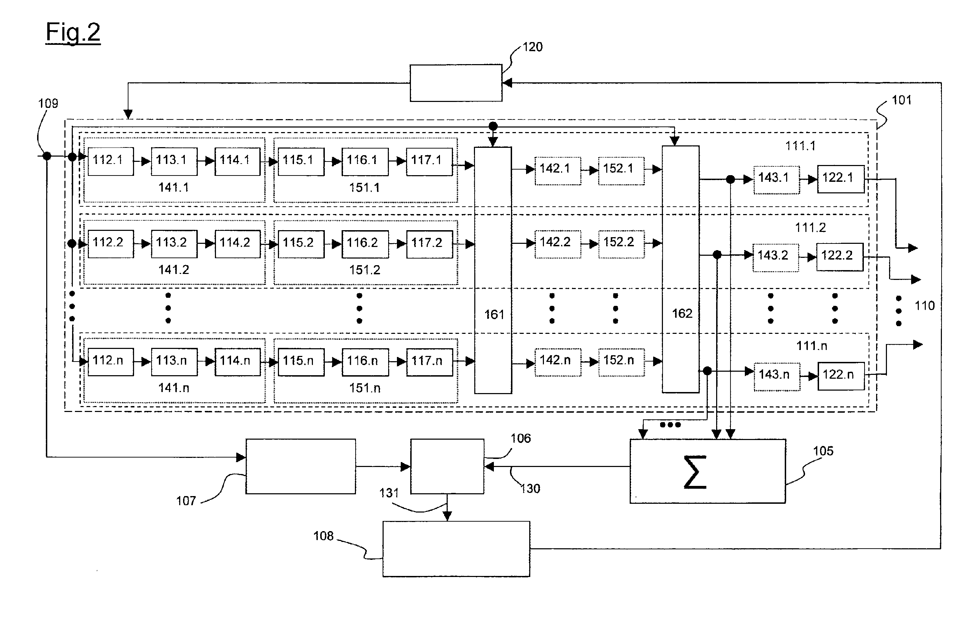

Figure 2 displays a possible schematic diagram of a receiver structure according to the invention, including a highly-efficient multi-stage multi-user receiver 101. The input baseband signal 109 with a sample rate corresponding to the chip rate of the system or higher is delivered to n channel receivers 111.1-111.n. They consist of three stages, the first stage and the second stage processing soft (real-valued) information, the third stage delivering hard (binary) information.

The first stage of each channel receiver 111.1-111.n comprises a first stage receiver unit 141.1-141.n including a despreader 112.1-112.n, a de-interleaver 113.1-113.n and a soft channel decoder 114.1-114.n. The first stage of each channel receiver 111.1-111.n further comprises a first stage re-transmitter unit 151.1-151.n including an interleaver 115.1-115.n, a respreader 116.1-116.n and a rechannel effect unit 117.1-117.n (which reintroduces the channel effects). The first stage of the receiver 101 also comprises a first stage interference canceller 161.

The input baseband signal 109 is first multiplied by a despreading code in the despreaders 112.1-112.n. The timing information for synchronising the despreading code to the input signal is passed to the despreaders 112.1-112.n by a receiver controller 120 which controls the entire receiver structure depicted in Fig. 2 and receives the timing information from the searcher 108. The resulting signal is subsequently de-interleaved in the de-interleavers 113.1-113.n, i.e. the shifting of code-words performed at the interleaver of the sending station is undone. In the soft channel decoders 114.1-114.n the despread and de-interleaved signal is channel decoded. The resulting soft valued coded information is delivered to the soft re-transmitter units 151.1-151, where it is processed by the interleavers 115.1-115.n, the respreaders 116.1-116.n and the rechannel effect units 117.1-117.n. Then this information is passed to the first stage interference canceller 161, where a first cancellation of signal components belonging to currently tracked users is performed. The output of the first receiver stage is again a spread interleaved coded signal.

The second stage of each channel receiver 111.1-111.n comprises a second stage receiver unit 142.1-142.n including identical components to those of the first stage receiver unit 141.1-141.n, a second stage re-transmitter unit 152.1-152.n including identical components to those of the first stage re-transmitter unit 151.1-151.n and a second stage interference canceller 162. In the second stage receiver- and re-transmitter units and interference canceller the same steps are executed as in the corresponding first stage units, i.e. processing the output signals of the first stage interference canceller 161 and yielding again spread interleaved coded signals. Again, only real-valued (soft) signals are processed. The effect of these first two stages of the channel receivers 111.1-111.n is to filter out the signal components belonging to given users. Noise, consisting mainly of interleaved and spread signals transmitted by other users, is most effectively cancelled out using this process.

The output of the second stage interference canceller 162 is an excellent estimate of the part of the input baseband signal 109 corresponding to the users considered and therefore these are the signals delivered to the summer 105.

As well as being delivered to the summer 105, the soft output signals of the second stage interference canceller 162 are passed to a third receiver stage comprising third stage receiver units 143.1-143.n including identical components to those of the first stage receiver units 141.1-141.n. This stage also includes a hard limiter 122.1-122.n for each channel receiver 111.1-111.n, such that in the end digital information bits are delivered, the decoded signals 110.

The soft estimates delivered to the summer 105 by all the channel receivers 111.1-111.n currently tracking any signals are combined to generate the output signal 130 of summer 105. This output signal 130 is passed to a subtractor 106 which inverts this combined signal 130.

The input baseband signal 109 delivered by an antenna and corresponding receiving circuits to the multi-user receiver 101 is also delivered to a delay unit 107. This unit 107 comprises storage means and works as a usual FIFO (first-in-first-out) buffer. The memory size is adapted to match the delay of the channel receivers 111.1-111.n of the multi-user receiver 101, such that the delayed input baseband signal stays in phase with the receiver processed signal 130, i. e. the soft estimate of the tracked signals.

In the subtractor 106, the delayed input baseband signal and the inverted estimate of the tracked signals are combined, such that the part of the input baseband signal coming from transmissions tracked by the receiver is cancelled. What is left in the remaining signal 131 is external noise due to low noise amplifiers, some residual noise because the estimates of the tracked signal part of the baseband signal are not perfect and signals corresponding to new users or new multi-path components of users already tracked. This remaining signal 131 is therefore passed to a searcher 108 which searches the signal and delivers despreading start timings of new user's signals and signal delay times for new multipath components of currently tracked users to the multi-user receiver 101, in particular to the controller 120 of the receiver 101.

The number of receiver stages in a channel receiver of the multi-user receiver 1 can vary, depending on the receiver design. For at least two stages, in general encoding, respreading and interleaving means will be comprised by the receiver and do not have to be additionally supplied. The soft estimates are advantageously obtained from the output of the last but one receiver stage, prior to final despreading, interleaving, decoding and hard limiting. Depending on the actual receiver design, an output of an earlier receiver stage can as well be used as an estimate of the corresponding baseband signal.

A receiver structure according to the invention may be combined with other techniques for reducing interference in order to improve the performance in the acquisition process, such as e. g. antenna array methods.

To summarise, it can be stated that the invention allows for the precise acquisition of spread-spectrum DS-CDMA signals despite heavy interference. The realisation of the process according to the invention is particularly advantageous if powerful multi-stage receivers are used to demodulate and decode transmitted signals.

## Claims

1. Process for acquisition of transmitted spread spectrum (SS) direct sequence (DS) code division multiple access (CDMA) signals in a digital communication system in which an input baseband signal (9, 109) received at one location includes multiple SS DS-CDMA signal components from multiple transmitters located at various locations and transmitted on different channels, especially via a multi-path distortion environment, comprising the steps of:
a) generating despread soft estimates of the received signal components over all users currently tracked;
b) respreading the soft estimates of the received signal components, yielding soft estimates of the input baseband signal for each channel currently tracked;
c) summing up the soft estimates of the input baseband signal and thus generating a summed signal (30, 130);
d) delaying the input baseband signal (9, 109);
e) subtracting the summed signal (30, 130) from the delayed input baseband signal, yielding an interference-reduced signal (31, 131);
f) searching the interference-reduced signal (31, 131) for new users or new multi-path components of users currently tracked.

2. Process according to claim 1, **characterised in that** the transmitted signals are interleaved coded signals and that the generation of soft estimates of the received signal components comprises the steps of de-interleaving, decoding and interleaving of the received signal components.

3. Receiver structure for acquisition of transmitted spread spectrum (SS) direct sequence (DS) code division multiple access (CDMA) signals in a digital communication system in which an input baseband signal (9, 109) received at one location includes multiple SS DS-CDMA signal components from multiple transmitters located at various locations and transmitted on different channels, especially via a multi-path distortion environment, comprising
a) a multi-user receiver (1, 101) for generating despread soft estimates of the received signal components over all users currently tracked;
b) respreading means (4.1-4.n, 116.1-116.n) for respreading the soft estimates of the received signal components, yielding soft estimates of the input baseband signal;
c) summing means (5, 105) for summing up the soft estimates of the input baseband signal;
d) a delay unit (7, 107) for delaying the input baseband signal (9);
e) subtractor means (6, 106) for subtracting the sum of soft estimates of the input baseband signal from the delayed input baseband signal, yielding an interference-reduced signal (31, 131);
f) a searcher (8, 108) for searching the interference-reduced signal (31, 131) for new users or new multi-path components of users currently tracked.

4. Receiver structure according to claim 3, **characterised in that** the transmitted signals are interleaved signals and that the multi-user receiver (101) generates de-interleaved soft estimates of the received signal components and that interleaving means (115) are comprised for interleaving the de-interleaved soft estimates of the received signal components.

5. Receiver structure according to claim 4, **characterised in that** the interleaving means (115) are integrated in the multi-user receiver (101).

6. Receiver structure according to claim 4 or 5, **characterised in that** the transmitted signals are coded signals and that the multi-user receiver generates decoded soft estimates of the received signal components and that encoding means are comprised for encoding the decoded soft estimates of the received signal components.

7. Receiver structure according to claim 6, **characterised in that** the encoding means are integrated in the multi-user receiver.

8. Receiver structure according to one of claims 3 to 7, **characterised in that** the multi-user receiver comprises at least two receiver stages (141.1-141.n, 151.1-151.n, 161, 142.1-142.n, 152.1-152.n, 162) for every user.

9. Digital communication system with a plurality of mobile terminals and a base station, the base station comprising a receiver structure according to one of claims 3-8.
